Europäisches Patentamt

European Patent Office

Office européen des brevets

(11) Veröffentlichungsnummer: **0 249 806 B1**

## (12) EUROPÄISCHE PATENTSCHRIFT

(45) Veröffentlichungstag der Patentschrift: **22.01.92**

(21) Anmeldenummer: **87108032.1**

(22) Anmeldetag: **03.06.87**

(51) Int. Cl.⁵: **B60K 5/08**, B60K 1/02,
B60K 17/12, B60L 11/00

(54) **Kraftfahrzeug.**

(30) Priorität: **18.06.86 DE 3620362**

(43) Veröffentlichungstag der Anmeldung:
**23.12.87 Patentblatt 87/52**

(45) Bekanntmachung des Hinweises auf die
Patenterteilung:
**22.01.92 Patentblatt 92/04**

(84) Benannte Vertragsstaaten:
**AT BE CH DE ES FR GB GR IT LI LU NL SE**

(56) Entgegenhaltungen:
CA-A- 986 727       FR-A- 1 003 940
FR-A- 1 054 026     FR-A- 1 104 213
FR-A- 1 110 589     GB-A- 697 541
US-A- 3 197 962     US-A- 3 497 027
US-A- 4 325 451     US-A- 4 593 786

(73) Patentinhaber: **Magnet-Motor Gesellschaft für
magnetmotorische Technik mbH
Moosstrasse 14
W-8130 Starnberg(DE)**

(72) Erfinder: **Götz Heidelberg, Dipl.-Phys.
Am Hügel 16
W-8136 Percha(DE)**

(74) Vertreter: **Klunker . Schmitt-Nilson . Hirsch
Winzererstrasse 106
W-8000 München 40(DE)**

## Beschreibung

Die Erfindung bezieht sich auf ein Kraftfahrzeug, aufweisend
- einen ersten Verbrennungsmotor und einen von diesem antreibbaren, ersten Generator;
- einen zweiten Verbrennungsmotor und einen von diesem antreibbaren, zweiten Generator; und
- mindestens einen Antriebs-Elektromotor.

Ein Kraftfahrzeug mit diesen Merkmalen ist bekannt (US-A-4 325 451, Sp. 1, Z. 18 bis 30).

Es handelt sich also um ein Kraftfahrzeug mit elektrischem Antrieb, bei der der hierfür erforderliche, elektrische Strom im Fahrzeug selbst durch einen Verbrennungsmotor mit elektrischem Generator erzeugt wird.

Es gibt zahlreiche Kraftfahrzeug-Einsatzfälle, bei denen die Leistungsanforderungen bzw. die wünschenswert im Kraftfahrzeug installierte Antriebsleistung sehr stark variieren, zum Beispiel Stadtbetrieb mit relativ geringer Geschwindigkeit und Betrieb außerhalb der Stadt mit relativ hoher Geschwindigkeit sowie Wunsch nach hohen Leistungsreserven für Überholvorgänge, Fahrten mit relativ geringer Zuladung und Fahrten mit hoher Zuladung bzw. mit Anhänger, und dergleichen mehr. Hinzu kommt die Überlegung, daß bei bestimmten Einsatzfällen besonders strenge Anforderungen an die Geringhaltung des Schadstoffausstoßes gestellt werden, beispielsweise innerhalb von Ballungsgebieten oder bei Smogsituationen, während bei anderen Einsatzfällen die Anforderungen an niedrigen Schadstoffausstoß weniger extrem sind.

Der Erfindung liegt die Aufgabe zugrunde, ein Kraftfahrzeug zu schaffen, bei dem die zur Verfügung stehende Leistung breit gespannt ist aber dennoch Kraftstoffverbrauch und Schadstoffausstoß insbesondere beim Fahren unter niedrigeren Leistungsanforderungen den heute technisch machbaren Optimalwerten möglichst nahekommen.

Zur Lösung dieser Aufgabe ist das Kraftfahrzeug erfindungsgemäß dadurch gekennzeichnet, daß der erste Verbrennungsmotor als in einem engen Arbeitskennfeldbereich arbeitend ausgelegt ist.

Man kann also mit dem erfindungsgemäßen Kraftfahrzeug insbesondere in Ballungsgebieten oder bei niedrigeren Leistungsanforderungen allein mit dem ersten Verbrennungsmotor fahren, mit allen günstigen Konsequenzen für Kraftstoffverbrauch und Schadstoffausstoß. Wenn dann für bestimmte Situationen höhere Leistungsanforderungen bestehen, beispielsweise höhere Nutzlast oder Überlandfahrt, wird der zweite Verbrennungsmotor eingesetzt. Dabei kann die Auslegung so sein, daß der zweite Verbrennungsmotor zu dem ersten Verbrennungsmotor zusätzlich in Betrieb genommen wird; man kann aber auch den ersten Verbrennungsmotor stillsetzen und stattdessen den zweiten Verbrennungsmotor, der eine höhere Leistung aufweist, in Betrieb nehmen. Es ist ferner möglich, mehr als einen "Zusatzmotor" mit Generator vorzusehen.

Der erste Verbrennungsmotor, der bei geringeren Leistungsanforderungen in Betrieb ist, läuft dabei für einen großen Teil seiner Betriebszeit mit einer Leistung, die in einem Optimalbereich liegt. Somit ergeben sich möglichst geringer Kraftstoffverbrauch und ein günstiges Abgasemissionsverhalten, die beträchtlich günstiger sind, als wenn man beispielsweise einen Verbrennungsmotor mit wesentlich höherer Leistung im niedrigen Teillastbereich laufen lassen würde. Der zweite Verbrennungsmotor tritt dann in Aktion, wenn tatsächlich höhere Leistungsanforderungen bestehen.

Da beim erfindungsgemäßen Kraftfahrzeug zwischen den Verbrennungsmotoren und den angetriebenen Rädern keine mechanische, drehmomentübertragende Verbindung besteht, ist man in der Wahl des Orts der Unterbringung der Verbrennungsmotoren im Kraftfahrzeug vollkommen frei. Als bevorzugte Möglichkeiten seien genannt:
- Zwei Verbrennungsmotoren vorn im Kraftfahrzeug;
- erster Verbrennungsmotor quer oder längs, vorn im Kraftfahrzeug; zweiter oder zweiter und dritter Verbrennungsmotor hinten im Kraftfahrzeug;
- beide Verbrennungsmotoren hinten im Kraftfahrzeug, insbesondere bei Transportern;
- beide Verbrennungsmotoren als "Unterflurmotoren", insbesondere bei Lastkraftwagen.

Es bestehen, wie dem Durchschnittsfachmann nach den vorstehenden Darlegungen klar ist, noch weitere Möglichkeiten der räumlichen Unterbringung der Verbrennungsmotoren im Kraftfahrzeug.

Das erfindungsgemäße Kraftfahrzeug kann insbesondere ein Personenkraftwagen, aber auch ein Transporter, ein Lastkraftwagen, ein Omnibus zur Personenbeförderung, und dergleichen sein.

Es kann sich ferner um ein Kraftfahrzeug mit Zweiradantrieb vorn oder hinten oder um ein Kraftfahrzeug mit vier oder noch mehr angetriebenen Rädern handeln. Vierradantrieb läßt sich wegen der fehlenden mechanischen Verbindung zwischen den Verbrennungsmotoren und den angetriebenen Rädern besonders elegant, platzsparend und gewichtssparend verwirklichen. Bei dem erfindungsgemäßen Fahrzeug wird ja die Leistung der beiden Verbrennungsmotoren elektrisch zusammengeführt, was im Vergleich zu einer mechanischen Leistungszusammenführung wesentlich einfacher ist. Die Energieumsetzungen in den Generatoren und in den Elektromotoren finden mit hohem Wirkungsgrad statt, so daß wegen der Einsparung der mechanischen Übertragungsverluste im Antriebsstrang herkömmlicher Kraftfahrzeuge der Gesamtwirkungsgrad auf etwa gleichem Niveau bleibt. Zwei installierte Verbrennungsmotoren, jeweils mit Generator mögen zwar zusammen ein etwas höheres Gewicht als ein Verbrennungsmotor mit der Leistung der Summe der Leistungen der beiden Verbrennungsmotoren haben; dieser leichte Gewichtsnachteil wird jedoch durch die mit der Erfindung erreichten Vorteile mehr als ausgeglichen.

In bevorzugter Ausgestaltung der Erfindung ist mindestens der zweite Verbrennungsmotor mittels leicht lösbarer Verbindungen der Halterung, des Stroms und des Kraftstoffs im Kraftfahrzeug angeordnet. Dies hat zur Folge, daß bei dem zweiten Verbrennungsmotor leicht die elektrischen Verbindungen zum restlichen Kraftfahrzeug, die Verbindung zum Kraftstoffvorrat des Kraftfahrzeugs und die Verbindungen zur mechanischen Festhaltung im Kraftfahrzeug gelöst werden können, so daß der zweite Verbrennungsmotor insgesamt leicht aus dem Kraftfahrzeug herausgenommen werden und in dieses eingesetzt werden kann. Hier kommt wiederum das Fehlen eines mechanischen, drehmomentübertragenden Abtriebs günstig zum Tragen. Man kann jedoch auch den ersten Verbrennungsmotor in analoger Weise leicht herausnehmbar vorsehen, so daß es möglich ist, zum Beispiel bei Überlandfahrten zur Gewichtsersparnis den ersten Verbrennungsmotor mitsamt erstem Generator herauszunehmen. Bei Fahrten mit niedrigen Leistungsanforderungen kann man zur Gewichtseinsparung den zweiten Verbrennungsmotor mitsamt zweitem Generator buchstäblich zu Hause lassen. Wenn der zweite Verbrennungsmotor nicht mit Kühlsystem und Abgasanlage versehen ist, muß beim Einbau für die Herstellung einer Verbindung an das fahrzeugeigene Kühlsystem und an ein zugeordnetes, fahrzeugeigenes Auspuffsystem gesorgt werden. Bei Unterbringung des zweiten Verbrennungsmotors im Heck eines Fahrzeugs ergeben sich günstige Voraussetzungen für ein eigenes, mit dem zweiten Verbrennungsmotor permanent verbundenes Auspuffsystem. - Die geschilderte, leichte Einbaubarkeit insbesondere des zweiten Verbrennungsmotors gibt auch Raum für die Möglichkeit, das Kraftfahrzeug zunächst mit nur dem ersten Verbrennungsmotor und zugeordnetem, erstem Generator zu verkaufen und den zweiten Verbrennungsmotor mit zweitem Generator sozusagen als "Leistungspaket" gesondert anzubieten. Um ein Beispiel zu geben: Man muß also nicht mehr das ganze Jahr mit einem Hochleistungs-Kraftfahrzeug in der Stadt herumfahren, nur weil man im Sommerurlaub einen schweren Bootsanhänger über Paßstraßen ziehen möchte.

Im Interesse günstiger Preise und einer vereinfachten Ersatzteilversorgung ist es als günstig bevorzugt, wenn der erste und der zweite Verbrennungsmotor von gleicher Grundkonstruktion sind, was vorzugsweise auch für den ersten und den zweiten Generator gilt. Innerhalb gleicher Grundkonstruktion oder abweichend von diesem Prinzip kann jedoch vorzugsweise der erste Verbrennungsmotor ein Dieselmotor und der zweite Verbrennungsmotor ein Ottomotor sein, wobei für den ersten Verbrennungsmotor die bekannten Vorteile hinsichtlich Kraftstoffverbrauch und Schadstoffausstoß gelten und für den zweiten Verbrennungsmotor der bekannte Vorteil hoher Leistungsdichte. Ferner kann man, innerhalb gleicher Grundkonstruktion oder davon abweichend, beim ersten und beim zweiten Verbrennungsmotor unterschiedliche Zylinderanzahl vorsehen, z.B. erster Verbrennungsmotor als Vierzylindermotor und zweiter Verbrennungsmotor als Sechszylindermotor. Insgesamt wird es für die meisten Fälle günstiger sein, den zweiten Verbrennungsmotor mit größerer Leistung als den ersten Verbrennungsmotor vorzusehen. Dann kommt man auch leichter in die Betriebsmöglichkeit mit ausgeschaltetem, erstem Verbrennungsmotor.

Im Interesse einer gewichtsmäßigen und raummäßigen Einsparung, die beim Vorhandensein von zwei Verbrennungsmotoren besonders erstrebenswert ist, kann man den ersten und/oder den zweiten Generator so gestalten, daß er zugleich als Anlasser dienen kann. Zu diesem Zweck wird häufig eine gesonderte Wicklungsgruppe im Generator/Anlasser günstig sein. Eine analoge Ausbildungsmöglichkeit gilt für eine Schaffung der Kombination Generator/Lichtmaschine oder Generator/Anlasser/Lichtmaschine; die für das Nachladen der Fahrzeugbatterie sinnvollen Spannungen und Stromstärken unterscheiden sich nämlich in der Regel von den entsprechenden Werten des Generators.

Die der Erfindung innewohnenden Vorteile lassen sich nochmals beträchtlich steigern, wenn - wie bevorzugt - ein Rotationsenergiespeicher vorgesehen ist, dem elektrische Energie unter Drehzahlzunahme zuführbar ist und aus dem elektrische Energie unter Drehzahlabnahme entnehmbar ist.

Stattdessen kann auch ein andersartiger Energiespeicher vorgesehen sein, insbesondere ein Stromakkumulator, der kein besonders großes Speichervermögen besitzen muß. Dies gibt die Möglichkeit, insbesondere den ersten Verbrennungsmotor mit nochmals verringerter Leistung vorzusehen, weil Leistungsspitzen, insbesondere beim Anfahren des Kraftfahrzeuges, aus dem Energiespeicher gedeckt werden können. Eine weitere Senkung des Kraftstoffverbrauchs und der Schadstoffemissionen sind die Folge.

Man kann, besonders gut beim Vorhandensein eines Energiespeichers, den ersten Verbrennungsmotor als in einem engen Arbeitskennfeldbereich arbeitend auslegen, also sich der vom Kraftstoffverbrauch und von den Schadstoffemissionen her optimalen Konzept des sog. Einpunkt-Verbrennungsmotors nähern, der zumindest während der meisten Zeit seines Betriebs am oder nahe beim Optimalpunkt seiner Auslegung hinsichtlich Drehzahl und Drehmoment betrieben wird.

Der erste und/oder der zweite Verbrennungsmotor können jeweils mit einem Lader ausgestattet sein, vorzugsweise einem mechanisch angetriebenen Lader oder einem Abgas-Turbolader. Wenn man den bzw. die Lader zuschaltbar gestaltet, erhält man eine weitere Spreizung des Leistungsspektrums des Kraftfahrzeugs.

Der erste und/oder der zweite Generator sind vorzugsweise mit Dauermagneten am Rotor, insbesondere Außenrotor, aufgebaut. Für den oder die Antriebs-Elektromotoren sieht man vorzugsweise eine Konstruktion mit elektronisch umgesteuerten Wicklungen, insbesondere in synchroner Bauweise und/oder mit Dauermagneten und/oder mit Außenrotor vor, wobei derartige Elektromotoren besonders gut steuerbar sind und in Kraftfahrzeugen keine Anfahrkupplung und kein Schaltgetriebe benötigen. Der Rotationsenergiespeicher ist ebenfalls vorzugsweise mit Dauermagneten aufgebaut und hinsichtlich seiner "Motorfunktion" bei der Zufuhr elektrischer Energie unter Drehzahlzunahme so aufgebaut, wie vorstehend für die Elektromotoren geschildert.

Für die räumliche Zuordnung des Antriebs-Elektromotors oder der Antriebs-Elektromotoren zu den Antriebsrädern des Kraftfahrzeugs gibt es eine Reihe von Möglichkeiten. Als besonders bevorzugt sei ein Antriebs-Elektromotor pro Antriebsrad erwähnt, wobei der jeweilige Antriebs-Elektromotor im jeweiligen Rad oder neben diesem, beispielsweise unter Zwischenschaltung einer Gelenkwelle, angeordnet sein kann.

Es ist bevorzugt, den oder die Elektromotoren als Leistungsbremse beim Bremsen des Kraftfahrzeugs vorzusehen, wobei die Elektromotoren dann als Generatoren arbeiten. Der beim Bremsen entstehende elektrische Strom fließt beim Vorhandensein eines Rotationsenergiespeichers in diesen; sonst kommt eine Vernichtung in Heizwiderständen in Betracht, die vorzugsweise ihre Wärme an das Kühl- bzw. Heizungssystem des Kraftfahrzeugs abgeben.

Es sei noch erwähnt, daß das Vorhandensein von mindestens zwei Verbrennungsmotoren naturgemäß das Risiko, mit dem Kraftfahrzeug wegen einer Panne nicht mehr weiterfahren zu können, beträchtlich reduziert, da der gleichzeitige Ausfall beider Verbrennungsmotoren extrem unwahrscheinlich ist. Dieser Gesichtspunkt ist nicht nur beim täglichen Kraftfahrzeugbetrieb unter mitteleuropäischen Verhältnissen von Bedeutung, sondern insbesondere auch beim Kraftfahrzeugbetrieb in dünn besiedelten oder an schlechtem Ersatzteilnachschub leidenden Gegenden.

Die Erfindung und Weiterbildungen der Erfindung werden im folgenden anhand von zwei Ausführungsbeispielen noch näher erläutert. Es zeigen:

Fig. 1     eine Draufsicht auf ein Personen-Kraftfahrzeug, das unter der vorderen Motorhaube zwei Verbrennungsmotoren und einen Rotationsenergiespeicher aufweist;

Fig. 2     eine Draufsicht auf ein Kraftfahrzeug, das unter der Motorhaube einen quer angeordneten, ersten Verbrennungsmotor und im hinteren Kofferraum einen leicht herausnehmbaren, zweiten Verbrennungsmotor aufweist.

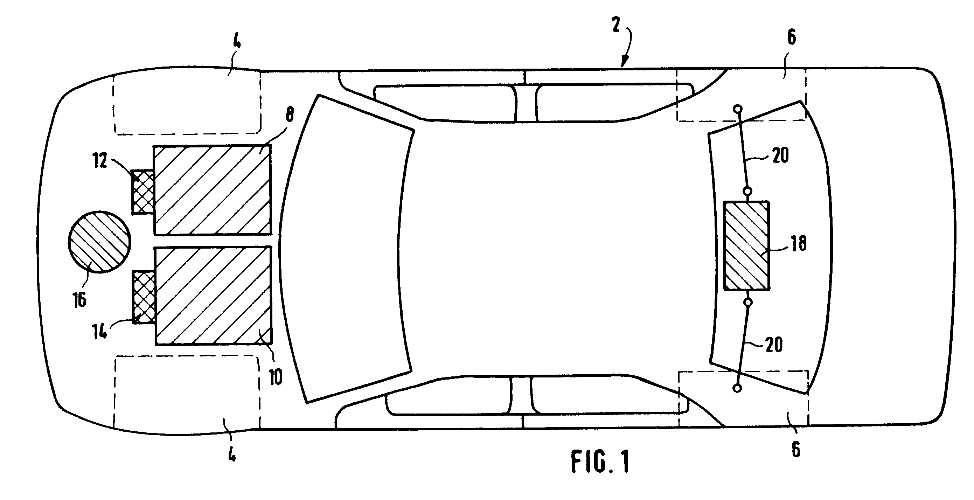

Man erkennt in Fig. 1 ein schematisiert dargestelltes Personen-Kraftfahrzeug 2 mit den beiden vorderen Radkästen 4 und den beiden hinteren Radkästen 6. Der Raum zwischen den beiden vorderen Radkästen 4 unterhalb der nicht eingezeichneten Motorhaube ist zur Unterbringung eines ersten Verbrennungsmotors 8 und eines zweiten Verbrennungsmotors 10 genutzt. Am ersten Verbrennungsmotor 8 ist vorn ein erster Generator 12 befestigt, und am zweiten Verbrennungsmotor 10 ist vorn ein zweiter Generator 14 befestigt. Bei den beiden Verbrennungsmotoren 8, 10 handelt es sich beispielsweise um längs eingebaute Vierzylinder-Reihenmotoren, von denen zwei nebeneinander in einer Limousine der gehobenen Mittelklasse Platz finden. Die verlängerte Kurbelwelle des jeweiligen Verbrennungsmotors 8, 10 kann gleich als Rotor des betreffenden Generators 12, 14 ausgebildet sein, indem in bestimmtem Abstand von der Drehachse ringförmig verteilt Dauermagnete abwechselnder Polung befestigt sind. Das umgebende Gehäuse des jeweiligen Generators 12, 14 trägt Wicklungen, in denen bei Drehung des jeweiligen Generator-Rotors Strom induziert wird. Bei den beiden Verbrennungsmotoren 8, 10 kann es sich um identische Ottomotoren handeln. Man kann jedoch auch einen kleineren und einen größeren Ottomotor nebeneinander setzen oder einen Ottomotor neben einen Dieselmotor kleinerer Leistung setzen.

Vor den beiden Verbrennungsmotoren 8, 10 ist etwa mittig ein Rotationsenergiespeicher 16 mit vertikaler Drehachse angeordnet.

Etwa an derjenigen Stelle, an der sich bei herkömmlichen Personen-Kraftfahrzeugen mit Frontmotor und Heckantrieb das Differential befindet, ist ein Elektromotor 18 mit horizontaler, quer zur Fahrtrichtung des Fahrzeugs 2 liegender Rotationsachse vorgesehen. Es handelt sich entweder um einen Elektromotor mit Differential oder um eine Einheit aus zwei Elektromotoren, nämlich für jedes Antriebsrad einen. Der Elektromotor 18 treibt auf jeder Axialseite eine Gelenkwelle 20 an, von denen jede zu einem nicht eingezeichneten, angetriebenen Hinterrad führt. Zwischen dem Elektromotor 18 und dem jeweiligen Hinterrad kann eine Drehzahluntersetzung vorgesehen sein, damit man einen Elektromotor 18 einsetzen kann, der schneller dreht als die Hinterräder.

Bei Fahrten in Ballungsgebieten ist lediglich der erste Verbrennungsmotor 8 mit zugeordnetem Generator 12 in Betrieb. Der erste Verbrennungsmotor 8 läuft ständig mit praktisch konstanter Drehzahl und unter praktisch konstantem Drehmoment, auf das der Generator 12 abgestimmt ist. Die von dem Elektromotor 18 abgeforderte Leistung schwankt entsprechend den Fahrterfordernissen und ist insbesondere beim Anfahren, sonstigen Beschleunigen oder relativ hoher Geschwindigkeit auf Ausfallstraßen hoch. Wenn der erste Verbrennungsmotor 8 mehr Strom erzeugt als der Elektromotor 18 momentan verbraucht, wird Strom in den Rotationsenergiespeicher 16 gespeist, wodurch sich dessen Drehzahl erhöht. Wenn hingegen vom Elektromotor 18 mehr Strom verbraucht wird als der erste Verbrennungsmotor 8 gerade liefert, wird von dem Rotationsenergiespeicher 16 Strom unter Drehzahlverringerung abgezogen.

Wenn hingegen höhere Leistungsanforderungen bestehen, beispielsweise bei Fahrt mit höherer Geschwindigkeit außerhalb von Ballungsgebieten oder bei hoher Zuladung, wird der zweite Verbrennungsmotor 10 mit zugeordnetem Generator 14 in Betrieb gesetzt. Man kann, je nach Anforderungen, entweder den ersten Verbrennungsmotor 8 und auch den Rotationsenergiespeicher 16 stillsetzen oder mit beiden Verbrennungsmotoren 8, 10 fahren.

Das geschilderte Fahrzeug ist besonders günstig als Taxi einsetzbar.

Elektrische Steuereinrichtungen, insbesondere zur Steuerung des Elektromotors 18 nach Maßgabe der Stellung eines Geschwindigkeitspedals des Fahrers sowie zur Steuerung des Rotationsenergiespeichers 16 sind beispielsweise in unter den Rücksitzen angebrachten Kästen untergebracht. Die erforderlichen elektrischen Verbindungskabel zwischen den Generatoren 12, 14, dem Rotationsenergiespeicher 16 und dem Elektromotor 18 sind aus Vereinfachungsgründen nicht eingezeichnet.

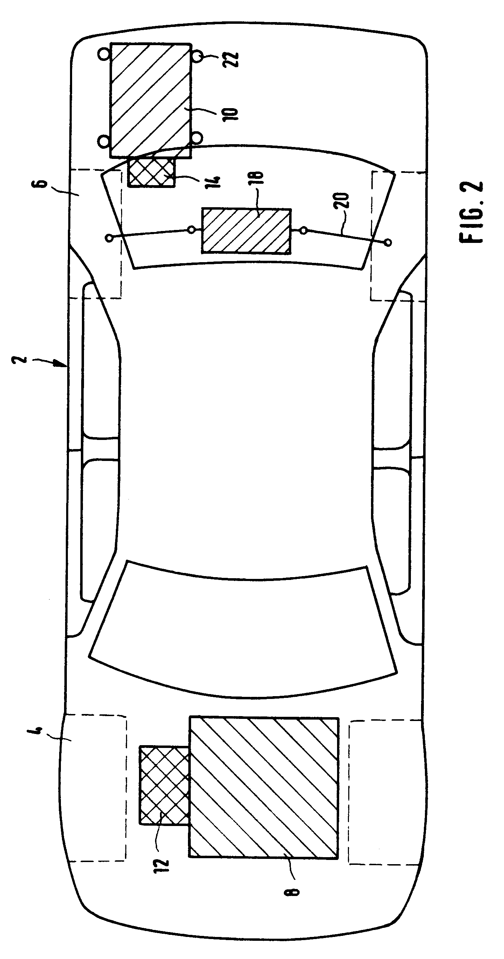

In Fig. 2 ist anhand eines Personen-Kraftfahrzeugs der gleichen Klasse eine andere Antriebskonfiguration veranschaulicht. Es werden nur die gegenüber dem ersten Ausführungsbeispiel abweichenden Merkmale beschrieben.

Der erste Verbrennungsmotor 8 mit erstem Generator 12 ist zwischen den vorderen Radkästen 4 unter der vorderen Motorhaube quer eingebaut. Es handelt sich beispielsweise um einen großvolumigen Dieselmotor, der, weil er seine Leistung nicht über eine Kardanwelle an die Antriebsräder abgeben muß und kein Schaltgetriebe benötigt, durchaus auch in einer Limousine der gehobenen Mittelklasse vorne quer eingebaut werden kann.

Der zweite Verbrennungsmotor 10 mit zweitem Generator 14 ist an einer Seite des Kofferraums in Längsrichtung eingebaut, wo er, je nach Leistung und Größe des Kraftfahrzeugs, etwa 20 bis 35% des Kofferraumvolumens einnimmt. Es handelt sich beispielsweise um einen Vierzylinder-Ottomotor in Reihenbauweise. Ein Rotationsenergiespeicher ist nicht vorgesehen.

Der zweite Verbrennungsmotor 10 mit zweitem Generator 14 ist leicht nachträglich in das Kraftfahrzeug 2 hineinsetzbar und auch wieder herausnehmbar. Er ruht gummigelagert auf vier Halterungspunkten 22, wobei die Halterung, weil keine drehmomentübertragende Leistungsableitung von der Einheit aus zweitem Verbrennungsmotor 10 mit zweitem Generator 14 vorhanden ist, einfach, leicht lösbar und schwingungstechnisch weich vorgesehen ist. Der zweite Verbrennungsmotor 10 hat ein eigenes, an ihm hängendes, nicht gezeichnetes Auspuffsystem, das bis zum Fahrzeugheck nur kurz ist. Beim Einbau des zweiten Verbrennungsmotors 10 mit Generator 14 sind außer der Befestigung an den Halterungspunkten 22 lediglich noch eine elektrische Verbindung, in erster Linie zum Abführen des im zweiten Generator 14 erzeugten Stroms, eine Verbindung zu einem entsprechenden Kraftstofftank des Fahrzeugs 2, sowie eine Verbindung zum Wasserkühlsystem des Fahrzeugs 2 herzustellen, falls die Kühlung nicht mit dem zweiten Verbrennungsmotor 10 integriert ist. Die genannten Verbindungen können beispielsweise als entsprechend gesicherte Steckverbindungen ausgeführt sein. Moderne Verbrennungsmotoren der hier für den zweiten Verbrennungsmotor 10 in Frage kommenden Art sind so leicht, daß sie ohne weiteres von zwei Personen in den Kofferraum des Fahrzeugs hineingehoben und, wenn erforderlich, auch wieder herausgehoben werden können.

Bei beiden Ausführungsbeispielen sind jeweils beide Generatoren 12, 14 so ausgebildet, daß sie zugleich als Anlasser und als Lichtmaschine zum Nachladen der Fahrzeugbatterie arbeiten. Auf diese Weise ist Platz eingespart worden, der sonst zur Unterbringung dieser Nebenaggregate erforderlich wäre.

**Patentansprüche**

1. Kraftfahrzeug (2), aufweisend
   - einen ersten Verbrennungsmotor (8) und einen von diesem antreibbaren, ersten Generator (12);
- einen zweiten Verbrennungsmotor (10) und einen von diesem antreibbaren, zweiten Generator (14); und
- mindestens einen Antriebs-Elektromotor (18),

dadurch gekennzeichnet, daß der erste Verbrennungmotor (8) als in einem engen Arbeitskennfeldbereich arbeitend ausgelegt ist.

2. Kraftfahrzeug nach Anspruch 1,
dadurch gekennzeichnet, daß mindestens der zweite Verbrennungsmotor (10) mitsamt zweitem Generator (14) mittels leicht lösbarer Verbindungen der Halterung (22), des Stroms und des Kraftstoffs im Kraftfahrzeug (2) angeordnet ist.

3. Kraftfahrzeug nach Anspruch 1 oder 2,
dadurch gekennzeichnet, daß der erste und der zweite Verbrennungsmotor (8; 10) von gleicher Grundkonstruktion sind.

4. Kraftfahrzeug nach einem der Ansprüche 1 bis 3,
dadurch gekennzeichnet, daß der erste Verbrennungsmotor (8) ein Dieselmotor und der zweite Verbrennungsmotor (10) ein Ottomotor ist.

5. Kraftfahrzeug nach einem der Ansprüche 1 bis 4,
dadurch gekennzeichnet, daß sowohl bei dem ersten Verbrennungsmotor (8) als auch bei dem zweiten Verbrennungsmotor (10) der jeweilige Generator (12; 14) zugleich als Anlasser ausgebildet ist.

6. Kraftfahrzeug nach einem der Ansprüche 1 bis 5,
dadurch gekennzeichnet, daß ein Rotationsenergiespeicher (16) vorgesehen ist, dem elektrische Energie unter Drehzahlzunahme zuführbar ist und aus dem elektrische Energie unter Drehzahlabnahme entnehmbar ist.

7. Kraftfahrzeug nach einem der Ansprüche 1 bis 5,
dadurch gekennzeichnet, daß ein Stromspeicher zur Deckung von Leistungsspitzen des Antriebs-Elektromotors (18) vorgesehen ist.

8. Kraftfahrzeug nach einem der Ansprüche 1 bis 7,
dadurch gekennzeichnet, daß der zweite Verbrennungsmotor (10) eine wesentlich größere Leistung als der erste Verbrennungsmotor (8) besitzt.

## Claims

1. A motor vehicle (2) comprising
- a first internal combustion engine (8) and a first generator (12) adapted to be driven by the latter;
- a second internal combustion engine (10) and a second generator (14) adapted to be driven by the latter; and
- a least one electric driving motor (18),

characterized in that said first internal combustion engine (8) is designed to operate in a narrow portion of the working characteristics.

2. A motor vehicle according to claim 1, characterized in that at least the second internal combustion engine (10) together with the second generator (14) is disposed in the motor vehicle (2) by means of easily separable connections of support (22), power and fuel.

3. A motor vehicle according to claim 1 or 2, characterized in that said first and second internal combustion engines (8; 10) are of the same basic construction.

4. A motor vehicle according to any one of claims 1 to 3, characterized in that the first internal combustion engine (8) is a diesel engine and the second internal combustion engine (10) is a spark-ignition engine.

5. A motor vehicle according to any one of claims 1 to 4, characterized in that both in the first internal combustion engine (8) and in the second internal combustion engine (10) the respective generator (12; 14) has at the same time the function of a starter.

6. A motor vehicle according to any one of claims 1 to 5, characterized in that a rotational energy accumulator (16) is provided to which electrical energy can be supplied, thereby increasing the speed thereof, and from which electrical energy can be withdrawn, thereby decreasing the speed thereof.

7. A motor vehicle according to any one of claims 1 to 5, characterized in that a current accumulator is provided for covering power peaks of the electric driving motor (18).

8. A motor vehicle according to any one of claims 1 to 7, characterized in that the second internal combustion engine (10) has a considerably higher power output than the first internal combustion engine (8).

## Revendications

1. Véhicule automobile (2), comportant
   - un premier moteur à combustion interne (8) et un premier générateur (12), entraîné par celui-ci ;
   - un deuxième moteur à combustion interne (10) et un deuxième générateur (14), entraîné par celui-ci ; et
   - au moins un moteur électrique d'entraînement (18),

   caractérisé en ce que le premier moteur à combustion interne (8) est conçu pour fonctionner dans un domaine de caractéristique de fonctionnement étroit.

2. Véhicule automobile selon la revendication 1, caractérisé en ce qu'au moins le deuxième moteur à combustion interne (10) avec le deuxième générateur (14) est placé dans le véhicule automobile (2), au moyen de liaisons facilement amovibles du bridage (22), du courant électrique et du carburant.

3. Véhicule automobile selon la revendication 1 ou 2, caractérisé en ce que le premier et le deuxième moteur à combustion interne (8 ; 10) ont la même construction de base.

4. Véhicule automobile selon l'une des revendications 1 à 3, caractérisé en ce que le premier moteur à combustion interne (8) est un moteur diesel et le deuxième moteur à combustion interne (10), un moteur à allumage commandé.

5. Véhicule automobile selon l'une des revendications 1 à 4, caractérisé en ce que pour le premier moteur à combustion interne (8) comme pour le deuxième moteur à combustion interne (10), le générateur correspondant (12 ; 14) est en même temps conçu comme un démarreur.

6. Véhicule automobile selon l'une des revendications 1 à 5, caractérisé en ce qu'il est prévu un accumulateur d'énergie de rotation (16) auquel de l'énergie électrique peut être envoyée par augmentation de la vitesse de rotation et duquel peut être prélevée de l'énergie électrique, par réduction de la vitesse de rotation.

7. Véhicule automobile selon l'une des revendications 1 à 5, caractérisé en ce qu'il est prévu un accumulateur de courant pour couvrir les pointes de puissance du moteur électrique d'entraînement (18).

8. Véhicule automobile selon l'une des revendications 1 à 7, caractérisé en ce que le deuxième moteur à combustion interne (10) possède une puissance bien supérieure à celle du premier moteur à combustion interne (8).

FIG. 1

EP 0 249 806 B1

FIG. 2